(19) Europäisches Patentamt / European Patent Office / Office européen des brevets

(11) **EP 2 689 141 B1**

(12) **EUROPEAN PATENT SPECIFICATION**

(45) Date of publication and mention
of the grant of the patent:
**18.02.2015 Bulletin 2015/08**

(21) Application number: **11815819.5**

(22) Date of filing: **02.12.2011**

(51) Int Cl.:
*F15B 13/043* (2006.01)    *F16K 31/40* (2006.01)
*F15B 13/04* (2006.01)    *F15B 13/08* (2006.01)
*G05D 16/04* (2006.01)    *G05D 7/00* (2006.01)

(86) International application number:
**PCT/US2011/062976**

(87) International publication number:
**WO 2012/128797 (27.09.2012 Gazette 2012/39)**

(54) **ELECTRO-PROPORTIONAL PILOT OPERATED POPPET VALVE WITH PRESSURE COMPENSATION**

VORGESTEUERTES ELEKTROPROPORTIONALSITZVENTIL MIT DRUCKAUSGLEICH

SOUPAPE À CHAMPIGNON À COMMANDE PAR PILOTE ÉLECTRO-PROPORTIONNELLE À COMPENSATION DE PRESSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.03.2011 US 201161466163 P**

(43) Date of publication of application:
**29.01.2014 Bulletin 2014/05**

(73) Proprietor: **Parker-Hannifin Corporation Cleveland, OH 44124 (US)**

(72) Inventor: **ARANOVICH, Felix Skokie, IL 60077 (US)**

(74) Representative: **Belcher, Simon James Urquhart-Dykes & Lord LLP Tower North Central Merrion Way Leeds LS2 8PA (GB)**

(56) References cited:
**US-A- 3 444 689**    **US-A- 3 777 773**
**US-A- 4 437 388**    **US-A- 5 447 093**

# Description

This invention relates to the field of hydraulic control valves. More specifically, this invention relates to a hydraulic flow control valve with pressure compensation. Still more specifically, this invention relates to a cartridge style poppet type electro-proportional valve with an integral low leakage and optimum flow pressure compensation feature, having a normally opened or a normally closed configuration.

Hydraulic control valves are well-known and are suitable for a wide variety of applications. Solenoid actuated hydraulic control valves typically have a coil of wire surrounding an armature and an end cap or plug. The armature and cap are made of a ferromagnetic material and are coaxially arranged with an air gap between the armature and the cap. A valve member extends from the armature. When the coil is energized, the armature, and hence the valve member, are moved due to magnetic flux forces through the air gap. For proportional solenoid actuated hydraulic control valves, the movement of the valve member is proportional to the input current on the solenoid coil.

One type of proportional solenoid control valve is a pilot-operated valve, that is, a valve which has a pilot valve member and a main valve member. The solenoid in such a valve controls the position of the armature to move the pilot valve to an actuated position to thereby allow movement of the main valve member. Pilot-operated valves are most typically used in high pressure situations where smooth control of the flow is necessary.

Electro-proportional pilot operated poppet type valves are used to control flow in many applications. They provide an opening for flow based on the amount of current applied. These can be normally opened or normally closed type valves, and the flow either increases or decreases with applied current. The advantage of the poppet valve is that it provides low leakage when fully closed. This contrasts with spool valves, which may be used to throttle flow but which may tend to allow leakage which may allow a load held at a height to drift over time.

While the poppet valve controls the flow based on a current applied to the solenoid coil, any variation in the differential pressure across the poppet valve changes the flow rate for any given size opening of the poppet. One method to remedy this is to utilize the electro-proportional poppet valve with a separate conventional pressure compensating spool that maintains a constant pressure drop across the poppet valve opening. The problem with this method is that the compensator spool itself leaks and allows the load to drift. The addition of seals on the compensator spool can help control the leakage but adds hysteresis to the valve's performance.

Additionally, it is desirable to select the compensator spool diameter to allow maximum flow across the compensator spool with minimum pressure losses. This means that the compensator spool diameter should be selected as large as the size of the poppet valve allows. Also, for the compensator spool to maintain a constant high pressure drop across the poppet valve in order to provide high flow rate across the poppet valve, a relatively large diameter conventional compensator spool requires a relatively high preload compensator spring. This is because the pressure drop across the poppet valve also exists across the compensator spool, and the compensator spring must balance the opposing forces on the conventional compensator spool caused by this differential pressure. When a poppet valve is used in a cartridge style hydraulic valve assembly, the inherent space limitations imposed by the cartridge design may limit or preclude the use of a high pressure drop conventional pressure compensator spoof and compensator spring integral with the cartridge due at least in part to these typical design considerations for conventional compensator spools.

US-3777773 discloses a pressure-compensating valve for use with a single spool control valve in controlling a hydraulic cylinder of a fluid motor. The compensating and control valves are provided in separate housings. Pressurised fluid which is supplied to the spool of the control valve acts on a compensating plunger of the compensating valve. The plunger is also acted on by a biassed stepped piston. One side of the piston is in communication with a low pressure exhaust port and is acted on by a primary spring. The other side of the piston is acted on by a secondary spring which is weaker then the primary spring. A feeder port is provided in the wall of the compensating valve housing for supply of fluid to the control valve. The flow of fluid at the feeder port is determined by the position of the compensating plunger, which is determined by the primary and secondary springs and by the pressure of fluid in ports in the compensating valve housing.

US-5375623 discloses a pressure compensating cartridge valve including a valve member which can slide in a valve housing between a first position in which it seals with a valve seat provided by the housing, and a second position in which fluid can flow between the inlet and outlet of the valve. The valve member has spaced apart flaring surfaces in the vicinity of the valve outlet so that pressure acting on the stem is compensated in its effect on the stem. The space around the valve member at the valve inlet is connected to the space surrounding the opposite end of the valve member by means of a pressure balance bore so as to compensate for pressure acting on the valve member at the valve inlet.

The present invention provides a cartridge valve which includes a valve cage, a fluid flow control valve and a pressure compensator, as defined in claim 1.

The cartridge valve uses pressure compensator which allows a reduced size compensator spring while maintaining a high pressure drop and high flow rates. Further, the pressure compensator minimizes leakage through the pressure compensator to minimize drift of a load. The pressure compensator includes a pressure balanced compensator spool and a pressure unbalanced or differential pressure compensator control piston. The compensator control piston acts on the compensator spool, and the compensator spring acts on the compensator spool and against the compensator control piston. The compensator control piston includes a poppet which closes and minimizes leakage through the compensator when there is no flow across the valve poppet and a load is to be held in a fixed position.

More specifically, the pressure compensator controls a pressure differential across a valve area. The pressure compensator includes a compensator spool and a compensator control piston. The compensator spool defines a variable fluid flow orifice with a fluid flow area determined by the position of the compensator spool. The compensator control piston acts against the compensator spool to move the compensator spool and change the position of the compensator spool to control the pressure differential across the valve area.

The compensator spool is pressure balanced, and the compensator control piston is pressure unbalanced. The compensator control piston has a first lateral cross sectional area exposed to fluid pressure on one side of the valve area and an oppositely facing second lateral cross section area exposed to fluid pressure on another side of the valve area. The first and second lateral cross sectional areas of the compensator control piston are substantially equal. The compensator spool has first and second oppositely facing lateral cross sectional areas exposed to fluid pressure on one side of the valve area, and the first and second lateral cross sectional areas of the compensator spool are substantially equal. The first and second lateral cross sectional areas of the compensator control piston are each smaller than each of the first and second lateral cross sectional areas of the compensator spool.

The compensator control piston acts against the compensator spool in one longitudinal direction. The compensator further includes a spring, and the spring acts against the compensator spool or the compensator control piston in a longitudinal direction opposite the one direction. The compensator spool has oppositely facing lateral cross sectional areas exposed to fluid pressure from the downstream side of the valve area, providing a pressure balanced compensator spool. The compensator control piston has oppositely facing lateral cross sectional areas, with one of its areas exposed to fluid pressure from the upstream side of the valve area and with the other of Its areas exposed to lower fluid pressure from the downstream side of the valve area, to create a differential pressure control piston. The unbalanced forces created by the differential pressures acting on the control piston are balanced by a spring.

A leakage flow path exists around the control piston between the upstream side and the downstream side. The compensator control piston includes a valve surface that substantially fully closes the leakage fluid flow path around the compensator control piston when the compensator control piston is moved in one longitudinal direction.

The valve area is defined by a valve poppet and a valve seat. The compensator includes a spring, and the spring acts against the compensator spool in a longitudinal direction opposite the direction in which the control piston acts against the compensator spool. The compensator spool lateral cross sectional area includes oppositely facing substantially equal lateral cross-sectional areas exposed to substantially equal fluid pressure from the upstream side of the valve area. The compensator control piston lateral cross sectional area includes substantially equal oppositely facing lateral cross sectional areas with one of its areas exposed to fluid pressure from the upstream side of the valve area and with the other of its areas exposed to fluid pressure from the downstream side of the valve area. The compensator control piston includes a valve surface that substantially fully closes the fluid leakage path around the compensator control piston between the oppositely facing lateral cross section areas of the compensator control piston when the compensator control piston is moved in one longitudinal direction.

The compensator spool and the compensator control piston are coaxially disposed in a stepped bore. The stepped bore has a larger diameter portion in which the compensator spoof is disposed and a smaller diameter portion in which the compensator control piston is disposed. The spring urges the compensator spool against the compensator control piston. The spring is disposed in the stepped bore on the side of the compensator spool opposite the compensator control piston. A pin extends laterally into the bore, and the spring acts between the pin and the compensator spool.

The valve area and the compensator are integral and are disposed in a valve cartridge cage. The valve cartridge cage has an inlet and an outlet and an intermediate chamber between the inlet and the outlet. The valve area opens and closes fluid pressure communication between the inlet and the intermediate chamber. The compensator spool opens and closes fluid pressure communication between the intermediate chamber and the outlet. The compensator maintains a substantially constant pressure differential across the valve area between the inlet and the intermediate chamber.

The force of the spring acting against the compensator spool is equal to the difference between the force created by the intermediate chamber pressure against the one lateral cross sectional area of the compensator control piston and the force created by the inlet pressure acting against the other lateral cross sectional area of the compensator control piston. A pilot operator is operatively connected to the valve poppet, and an electrical solenoid armature is operatively connected to the pilot operator. The position of the valve poppet relative to the valve seat is proportional to electrical power supplied to the solenoid operator, and the pressure differential between the inlet and the intermediate chamber across the valve area is substantially constant.

The compensator control piston is operable to sense the pressure differential across the valve area. The compensator control piston has one end exposed to inlet pressure upstream of the valve area, and inlet pressure acting on the compensator control piston forces a compensator control piston surface to sealingly engage a compensator control piston seat.

A housing has a bore, and the compensator member is disposed in the bore with the leakage flow path defined between the bore and the member. The compensator includes a valve that substantially closes the leakage flow path between the upstream and downstream lateral cross sectional areas of the control piston when the valve area is in a substantially closed position.

Embodiments of this invention will now be described in further detail with reference to the accompanying drawings, in which:

Figure 1 is a longitudinal cross sectional view of a cartridge style, normally closed, electro-proportional, pilot operated poppet valve with pressure compensation, shown with no inlet pressure applied, according to a preferred embodiment of the invention;
Figure 2 is a longitudinal cross sectional view of the valve of Figure 1, shown in an at rest operating position with inlet pressure applied;
Figure 3 is a longitudinal cross sectional view of a valve block in which the valve of Figure 1 is installed, with the valve of Figure 1 shown in elevation;
Figure 4 is a schematic circuit diagram of the valve of Figure 1 ;
Figure 5 is a schematic circuit diagram of a first example of a hydraulic circuit in which the valve of Figure 1 may be used;
Figure 6 is a schematic circuit diagram of a second example of a hydraulic circuit in which the valve of Figure 1 may be used; and
Figure 7 is a longitudinal cross sectional view of a cartridge style, normally opened, electro-proportionai, pilot operated poppet valve with pressure compensation, shown in an at rest operating position with inlet pressure applied, according to another preferred embodiment of the invention.

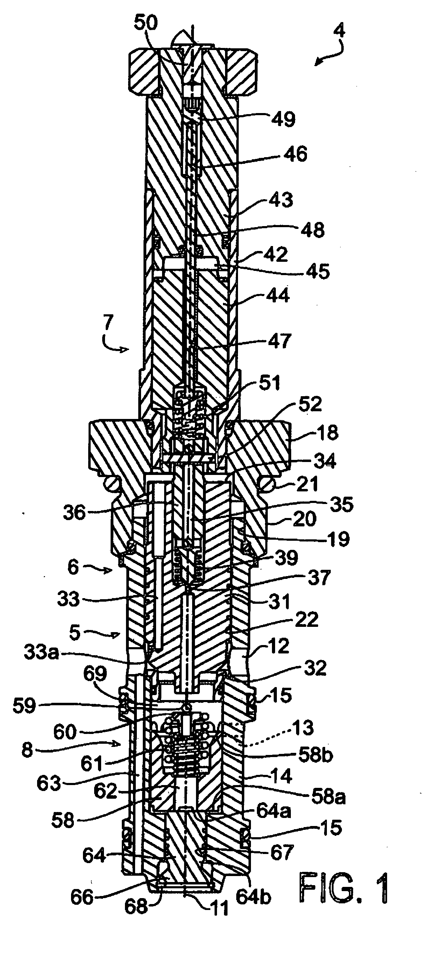

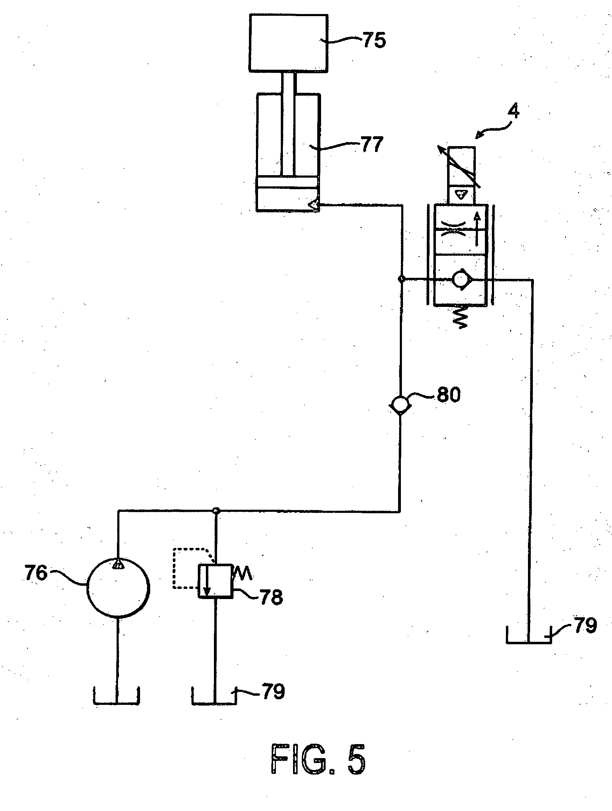

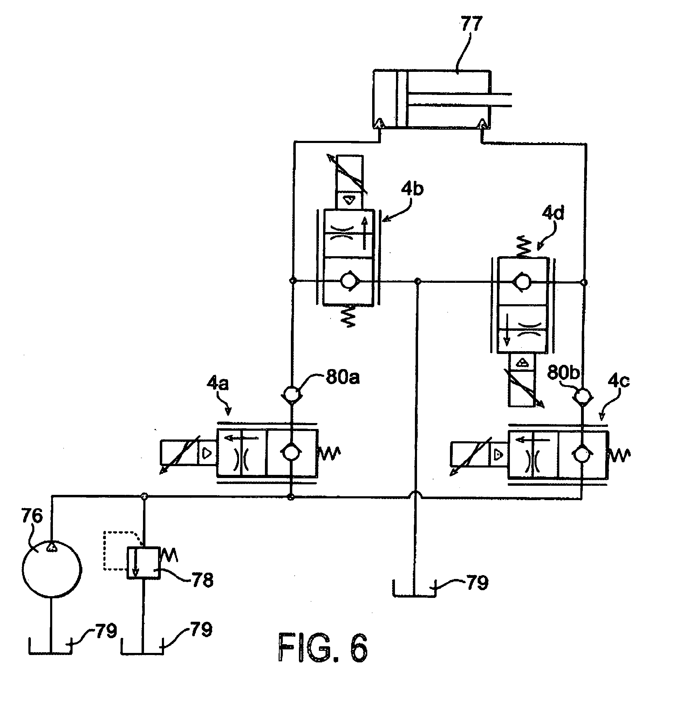

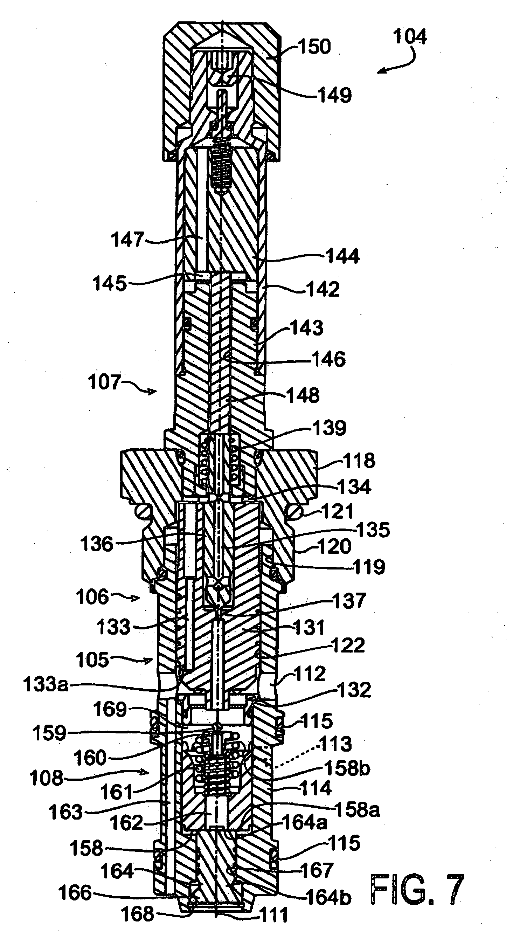

A preferred embodiment of a normally closed valve 4, constructed in accordance with the present invention, is illustrated in Figures 1-4. The valve 4 assembled in various hydraulic circuits is illustrated schematically in Figures 5 and 6. A preferred embodiment of a normally opened valve 104, constructed in accordance with the present Invention, is illustrated in Figures 7 and 8. All components of the valves 4 and 104 are of a suitable material selected according to the pressure, temperature, fluid type, and other requirements of the application in which the valves 4 and 104 are to be used, in the illustrated embodiments, the metal components are of carbon steel that may be case hardened as appropriate. The O-ring seals may be of other suitable material such as a fluorocarbon material, and the backup rings may be of non-rubber thermoplastic material. The valves 4 and 104 are of the general type referred to as a cartridge valve. More specifically, the valves 4 and 104 are cartridge type elect o-proportional pilot operated poppet valves with integral pressure compensation. A hydraulic cartridge valve is a hydraulic flow control device that includes the internal integral moving elements of a valve without an integral housing. A cartridge valve is inserted into a cavity of a housing with appropriate flow passageways, such as a manifold, and the resulting combination performs like any conventional hydraulic valve. The term integral means two or more functionally different cooperating components that are assembled without externally exposed fluid connections and used as a whole such that at least one of the components is an essential part to complete the other. For example, an Integral cartridge valve may include a valve poppet and a valve seat and an actuator for controlling the valve poppet relative to the valve seat. The term pressure compensated or pressure compensator includes both post compensation and p re-compensation. The term balanced with reference to a movable hydraulic member refers to a device that is subject to substantially equal hydraulic pressures acting in opposite directions on oppositely facing lateral cross sectional areas. The term unbalanced or differential pressure with reference to a movable hydraulic member refers to a device that is subject to differential hydraulic pressures acting in opposite directions on oppositely facing lateral cross sectional areas.

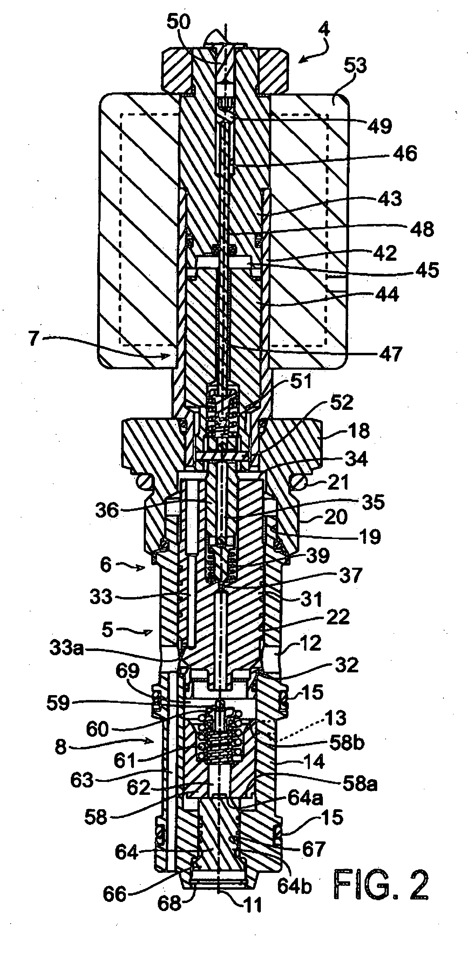

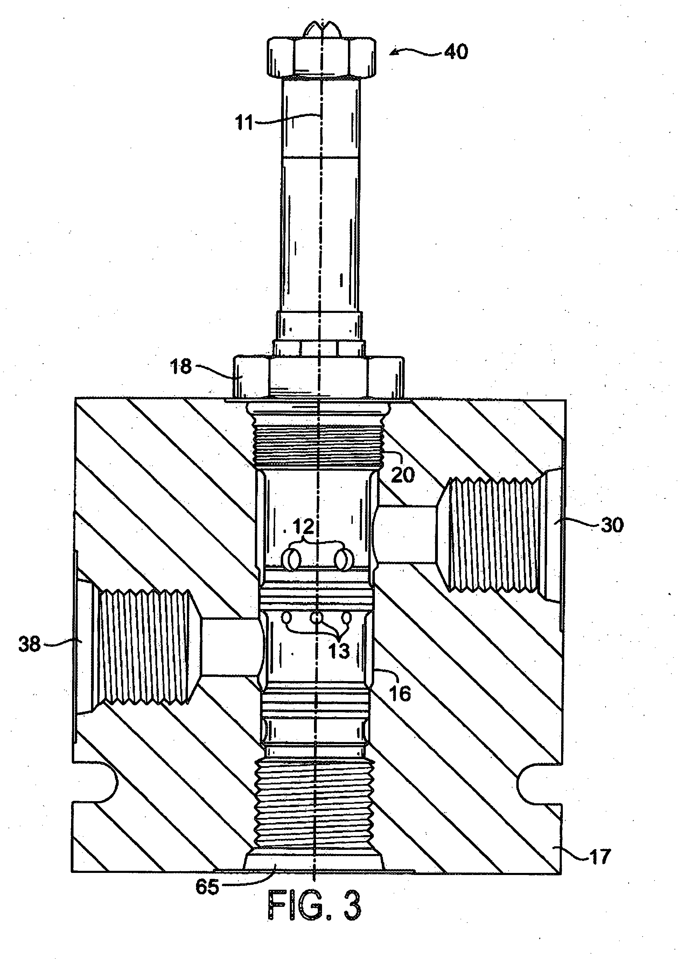

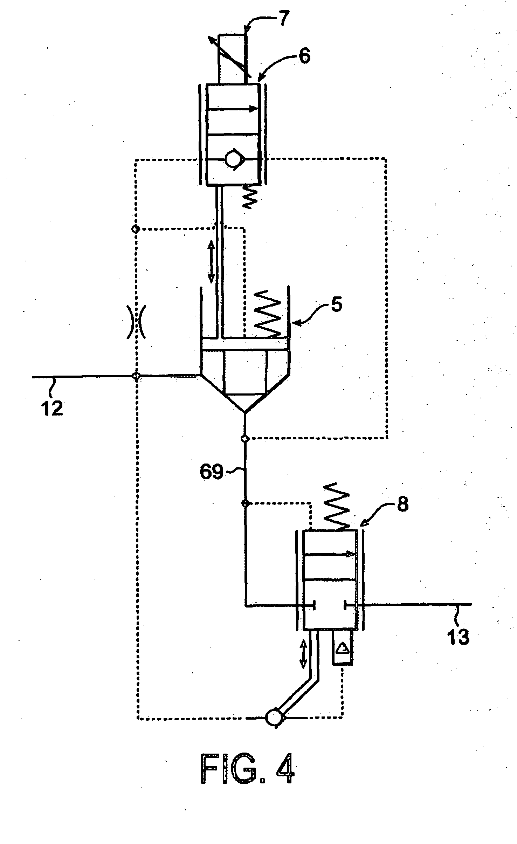

Referring first to Figures 1-4, the valve 4 is Illustrated in Figure 1 without Inlet pressure applied and is illustrated in Figure 2 with inlet pressure applied. The valve 4 is illustrated as assembled in a valve block or manifold in Figure 3, and the valve 4 is illustrated schematically with inlet pressure applied in Figure 4. The valve 4 includes a main fluid flow control valve 5, a pilot operator 6, a solenoid actuator 7 and a pressure compensator 8. The fluid flow control valve 5 controls the flow rate of hydraulic fluid through the valve 4. The pilot operator 6 controls the position of the fluid flow control valve 5, and the solenoid actuator 7 controls the position of the pilot 6. The pressure compensator 8 maintains a substantially constant pressure drop or pressure differential across the main control valve 5. An electrical power source (not shown) is connected to the solenoid actuator 7. As further described below, the opening of the main control valve 5 and flow rate through the valve 4 are proportional to the electrical current supplied by the power source to the solenoid actuator 7. These components are integral with one another and are coaxiaily disposed along a longitudinal axis 11.

The valve 4 includes a hydraulic fluid inlet 12 and a hydraulic fluid outlet 13. The inlet 12 and outlet 13 are each a plurality of circumferentially spaced radial drilled passages in a valve cage 14. The external surface of the valve cage 14 includes O-ring and backup ring seal assemblies 15. The components of the valve 4 are assembled as an integral cartridge that is assembled into a machined stepped diameter opening 16 in a manifold 17 (Figure 3), and the seal assemblies 15 separate the inlet 12 and outlet 13. The valve 4 is secured in the opening 16 by a threaded adapter 18, which carries the cage 14 by threads 19 on Its internal surface and which connects to the opening 16 by threads 20 on its external diameter. An O-ring seal 21 seals between the external surface of the adapter 18 and the manifold 17. A stepped bore or central passage 22 extends longitudinally from end to end through the cage 14. Fluid enters the cross drilled inlet holes 12 of the cage14 from an inlet port 30 of the manifold 17. Main valve 5 includes a generally cylindrical valve poppet 31 and an associated annular valve seat 32 which is carried on the interior surface of the cage 14. When the valve 4 is in its normally closed position, inlet fluid from inlet holes 12 and inlet port 30 upstream of main valve 5 is blocked by the poppet 31 engaging the seat 32.

The pilot operator 6 of the valve 4 includes a longitudinal passage 33 that extends through one side of the poppet 31. The passage 33 allows fluid to travel from the inlet holes 12 upward as viewed in Figure 1 to the top side 34 of the poppet 31. The fluid from the top side 34 of the poppet then travels down through a central longitudinally extending passage 35 in a cylindrical pilot 36. The lower end of the passage 35 terminates at a radial passage which connects the central passage 35 to the exterior of the pilot 36. Fluid traveling down through the passage 35 is blocked by the bottom end of the pilot 36 engaging a pilot seat 37 in the back side of the poppet 31. The engagement of the valve poppet 31 with the valve seat 32 and the engagement of the pilot 36 with the pilot seat 37 prevent fluid from passing downstream from inlet hofes12 and inlet port 30 to outlet holes 13 and outlet port 38. A spring 39 acts between the pilot 36 and the poppet 31.

Referring still to Figures 1-4, the top part of the adapter 18 carries the solenoid actuator 7. The solenoid actuator 7 includes a solenoid tube 42. The solenoid tube 42 has an externally threaded portion near its bottom region that is connected to an internally threaded portion of the adapter 18. A solenoid plug or cap 43 is fixed to the tube 42 by external threads on the cap 43 which engage internal threads on the top region of the tube 42. An armature 44 is slidably disposed for longitudinal movement within the tube 42, and an air gap 45 is provided between the armature 44 and the cap 43. A hole 46 extends longitudinally from end to end through the cap 43, and a hole 47 extends longitudinally from end to end through the armature 44. A rod 48 is slidably disposed in the holes 46 and 47, and the top end of the hole 46 is closed by a set screw 49 and a tamper resistant screw 50. Springs 51 act between the bottom end of the rod 48 and the pilot 36, to bias the pilot 36 downward toward its seat 37. The set screw 49 adjusts the spring load acting in the downward direction against the pilot 36. Radially extending pins 52 provide a universal joint connection between the armature 44 and the pilot 36, which allows for any misalignment between the armature 44 and pilot 36 while securing them for longitudinal movement together.

A solenoid coil 53 (not illustrated in Figures 1 and 3 but shown in Figure 2). surrounds the cap 43 and armature 44. As electrical power is applied to the solenoid coil 53, the armature 44 moves upward to close the air gap 45 proportional to the current applied. This upward movement of the armature 44 lifts the pilot 36 off the pilot seat 37, which allows fluid to pass from inlet holes 12 through passage 33 and to the downstream side of the poppet 31 and seat 32. The passage 33 in the side of the poppet 31 that allows flow to the pilot 36 is connected to inlet 12 through an orifice 33a which extends radially from the passage 33 to the outer peripheral surface of the poppet 31. As the pilot 36 to pilot seat 37 opening area increases for any given inlet pressure, the pressure behind the poppet 31 (which is the pressure on the top 34 of the poppet 31 as viewed in Figure 1) decreases. The inlet pressure from inlet holes 12 acting on the differential area on the bottom of the poppet 31 (which is the annular area of the bottom of the poppet 31 between the outside diameter of the poppet 31 and the seat diameter at which the poppet 31 engages the seat 32) provides a lifting force to move the poppet 31 in an upward or opening direction. In this way the poppet 31 moves to balance the forces acting on it, and the position of the poppet 31 is proportional to the pilot 36 position and proportional to the electrical current applied to the solenoid coil 53.

The pressure compensator 8 of the valve 4 includes a generally cylindrical member that is a pressure compensator spooi 58. The compensator spool 58 is slidably disposed in the central opening 22 of the cage 14. The compensator spool 58 and outlet passages 13 define a variable orifice, and the compensator spool 58 is arranged to cover and uncover the outlet passages 13 to increase and decrease the size of the orifice. The outlet passages 13 are uncovered by the pressure compensator spool 58 when the pressure compensator spool 58 is in its position illustrated in Figure 1. A laterally extending pin 59 is arranged In a cross drilled hole in the cage 14, and a spring retainer 60 engages the pin 59 to retain the spring retainer 60 against longitudinal movement relative to the cage 14. Concentric springs 61 act between pin 59 (through the spring retainer 60) and the pressure compensator spooi 58. Fluid passing the pilot 36 and then the poppet seat 32 then is exposed to the spring side or top of the compensator spool 58. A longitudinally extending central passage 62 extends through the spool 58. Fluid passes through passage 62 in the center of the spool 58 and radial notches on the bottom end of the spool 58. In this manner the fluid is in open communication with both sides of the pressure compensator spooi 58. The fluid pressure is equal on the opposite sides 58a and 58b of the spool 58 and the opposite sides have the same lateral cross sectional area, to balance the forces acting in opposite directions on the spool 58.

A longitudinal passage 63 extends between the inlet passage 12 and the bottom end of the manifold stepped bore 16 and bottom end of the central passage 22. Another generally cylindrical pressure compensator member is a pressure compensator control piston 64 which is slidably disposed in the bottom end of the central passage 22. The passage 63 establishes open or unrestricted fluid pressure commu lication between the inlet passage 12 and the bottom end 64b of compensator control piston 64. The pressure compensator control piston 64 acts against the bottom end of the pressure compensator spool 58 in an upward direction. Springs 61 on the opposite or top side of the compensator spool 58 act against the spool 58 in a downward direction and push the compensator spool 58 and control piston 64 together. The bottom end of the central passage 22 of the cage 14 and the bottom end 64b of the control piston 64 are exposed to inlet pressure in the inlet passages 12 by way of the open passage 63. Port 65 of manifold 17 (Figure 3) is plugged by a threaded plug (not shown). Port 65 is not used as an inlet or outlet but is a pressure compensation control port exposed to inlet fluid pressure through passage 63. Alternatively, the described threaded plug could be eliminated by a design (not shown) in which the longitudinal passage in the manifold 17 is machined as a blind bore rather than as a through bore.

The central passage 22 in cage 14 is stepped and includes a larger diameter portion in which larger diameter pressure compensator spool 58 is disposed and a reduced or smaller diameter portion in which the smaller diameter pressure compensator control piston 64 is disposed. The top lateral end face 64a of the control piston 64 provides a lateral cross sectional area that is exposed to the fluid pressure downstream of the poppet 31 and seat 32 by the passage 62. The bottom lateral end face 64b of the control piston 64 provides an oppositely facing lateral cross sectional area that is exposed to higher fluid pressure upstream of the poppet 31 and seat 32 by the passage 63. In this manner, the control piston 64 is subject to differential pressures acting against its opposite and equal lateral end surface areas. The control piston 64 has an enlarged diameter head portion 66 at its bottom end, and the central stepped passage 22 in the cage 14 includes an annular valve seat 67.

When the valve 4 has no hydraulic fluid pressure applied to the inlet port 30 and inlet passages 12, the valve 4 is in the position illustrated in Figure 1. In this position, the springs 61 bias the pressure compensator spool 58 and control piston 64 downward until the control piston 64 engages a retaining ring 68. The pressure compensator spool 58 opens outlet passages 13. The springs 51 and 39 in this position bias the poppet 31 to its normally closed position against the seat 32.

When hydraulic fluid pressure is applied to inlet passages 12 in the absence of an actuating electrical current to the solenoid coil 53, the valve 4 retains a first or at rest operating position illustrated in Figure 2. In this position, the poppet 31 remains closed against its seat 32. The fluid inlet pressure in inlet passages 12 is communicated through passage 63 to the bottom of pressure compensator control piston 64. The top 64a of compensator control piston 64 is at outlet or downstream drain pressure through passage 62, and the greater inlet pressure moves the compensator control piston 64 and the pressure compensator spool 58 upward against the bias of the springs 61 until the head portion 66 of pressure compensator control piston 64 engages seat 67. The inlet pressure in port 65 holds the piston 64 in this position, with its conical seating face of its head portion 66 engaging against the seat 67. There is a normal leakage flow path between the exterior surface of the compensator control piston 64 and the stepped bore 67 and between the exterior surface of the compensator spool 58 and the stepped bore 67. The engagement of the head portion 66 of the compensator control piston 64 against the seat 67 substantially closes this leakage flow path. The compensator spool 58 covers or closes the outlet passages 13, and there is no pressure drop across the compensator spool 58 and piston 64 because there is no flow due to engagement of the piston head 66 with its seat 67. Because there is substantially zero fluid leakage across the compensator control piston 64 and poppet 31 in this position, any hydraulic motor such as a hydraulic cylinder (not shown in Figures 1-3) that is connected to receive outlet flow from outlet passages 13 and outlet port 38 or that is connected to inlet passages 12 and inlet port 30 will be substantially stationary and will not tend to substantially drift or move. In this manner, any load that is controlled by the valve 4 will not substantially leak down during this mode of operation. In Figure 4 the compensator 8 is illustrated in the shifted position as if inlet pressure is applied and holding a load for the normally closed version of the valve 4.

The steady state normally closed first position or condition or mode of the valve 4 continues until the poppet 31 is opened by electrical current to the solenoid coil 53 moving the pilot 36 upward as viewed in Figure 2 away from seat 37 to reduce fluid pressure on the top of poppet 31. Fluid then begins to flow from the upstream side of poppet 31 and seat 32 toward the downstream side. This causes increased pressure downstream of poppet 31 and seat 32 at chamber 69, and this increased pressure is communicated through passage 62 to the top end 64a of compensator control piston 64. The force created by this increased pressure acting on the top end of compensator control piston 64 is added to the force of springs 61, and this combined force moves the compensator control piston 64 and compensator spool 58 downward to open the passages 13 and hermit flow through the valve 4. As the compensator control piston 64 and compensator spool 58 move as a unit to open the passages 13, the compensator control piston 64 and compensator spool 58 operate as a normal pressure compensation device to maintain a constant pressure drop across the poppet 31 to seat 32 opening. This constant pressure drop is achieved by the compensator spool 58 and control piston 64 operating as a unit to balance the forces acting in opposite directions on the unit. The compensator 8 provides a variable pressure drop between the outlet side of the poppet 31 in intermediate chamber 69 and the outlet passages 13, to maintain a substantially constant pressure drop across the poppet 31 to seat 32 opening.

The force balance on the compensator spool 58 and compensator control piston 64 as a unit is then:

$$P1A1 = P2A2 + F; \text{ and}$$

and
the spring force is:

$$P1A1 - P2A2 = F,$$

where:

P1 is the fluid pressure upstream of the poppet 31 to seat 32 opening;
A1 is the area 64a of the compensator control piston 64 exposed to pressure P1;
P2 is the fluid pressure downstream of the poppet 31 to seat 32 opening;
A2 is the area 64b of the compensator control piston 64 exposed to pressure P2 (which is equal to A1 in this example); and
F is the force of springs 61.

This arrangement of the pressure compensator spool 58 and smaller diameter pressure compensator control piston 64 acting as a unit allows for a lower spring force (hence a small spring) with the use of the larger spool 58 (which is required to handle a higher flow rate). This helps to reduce the size of the valve 4, particularly when the valve 4 is a cartridge valve with limited space availability. This enables the valve 4 to provide a main valve 5 and an integral pressure compensator 8 that are in coaxial alignment in an integral cartridge valve, while accommodating high pressures drops across the main valve 5 and high flow rates with a relatively small spring force. While any pressures and sizes of the valve 4 may be selected, the compensator spool 58 diameter may be selected to allow maximum flow to pass through the spool chamber with minimum pressure losses. In other words, the diameter of the spool 58 may be selected to be as large as the size of the valve 4 allows.

The illustrated embodiment shown in Figures 1-4 provides a compensator unit 8 that includes the compensator spool 58 that is pressure balanced and a separate unbalanced compensator control piston 64 of smaller diameter to sense the pressure differential. The diameter of the compensator control piston 64 can be as small as desired (that is, the areas A1 and A2 described above can be as small as desired) so that a relatively smaller spring will accommodate a relatively larger differential pressure according to the above described formulae. Also, while conventional pressure compensation spools may allow some amount of leakage flow unless they are provided with a resilient seal (which may provide an undesirable hysteresis effect), the compensator spool and control piston illustrated in the drawings preclude any substantial flow around the compensator members and minimize or substantially eliminate load drift. Further, the separate piece compensator spool and compensator control piston illustrated in the drawings minimize concentricity issues during manufacture. In the illustrated embodiment of Figures 1-4, more than one spring is used for the force F (two concentric springs 61 are used). This use of concentric springs can further reduce the size of the springs needed to provide the desired large pressure drop across the poppet 31 and seat 32 to provide the desired large flow rates.

Referring now to Figure 5, the valve 4 is illustrated in a hydraulic circuit which may, for example, be a circuit of a lift mechanism used to lift a load 75 of a mobile truck (not shown) such as a fork lift truck. A hydraulic pump 76 supplies hydraulic fluid under pressure to a hydraulic cylinder or other hydraulic motor 77 to lift the load 75. When a control valve 78 connects the pump 76 to drain or tank 79, a logic check valve 80 closes and fluid from the cylinder 77 is directed to the valve 4. If the load 75 is to be held substantially stationary, no electrical power is provided to the solenoid coil 53. The valve 4 then is in its normally closed position illustrated in Figures 1-4 and described above, and the pressure compensator spool 58 and control piston 64 substantially eliminate or reduce substantially to zero leakage flow from cylinder 77 to drain 79 to substantially eliminate drift of the load 75. When the load 75 is to be lowered, electrical current is provided to the solenoid coil 53 to begin to move poppet 31 away from seat 32 by a distance that is proportional to the applied current. The pressure compensator spool 58 and pressure compensator control piston 64 during this mode of operation maintain a constant pressure drop across the poppet 31 and seat 32, so that flow through the valve 4 is proportional to the opening between the poppet 31 and seat 32 and proportional to the electrical current supplied to the solenoid coil 53. In this manner, the lowering speed of the load 75 is controlled by and is proportional to the current supplied to the solenoid coil 53, substantially independently of the weight of the load 75

Referring now to Figure 6, a hydraulic schematic circuit diagram is shown in which multiple valves 4a-4d are used to control fluid flow into and out of both sides of the hydraulic motor 77. The hydraulic motor 77 may, for example, be any type of linear or rotary hydraulic actuator, and is a hydraulic cylinder in the Figure 6 illustrated schematic. The valves 4a-4d are substantially identical to the valve 4 described above. When fluid is to be supplied to the piston side of the motor 77 (that is, the left side as viewed in Figure 5) from the pump 76, electrical current is applied to the solenoid coil 53 of valve 4a and fluid at a flow rate determined by valve 4a flows through logic check valve 80a to the piston side of the motor 77. Fluid flow returning to tank 79 from the rod side of the motor 77 (that is, the right side of motor 77) is controlled by valve 4d. Valves 4b and 4c during this mode of operation remain in their normally closed positions, with no electrical current supplied to their solenoid coils. When the direction of travel of the hydraulic motor 77 is to be reversed, electrical current is supplied only to valves 4c and 4b, and valves 4a and 4d remain in their normally closed positions. Fluid from pump 76 in this mode of operation flows through valve 4c and logic check valve 80b to the rod side of hydraulic motor 77, and fluid from the piston side of the hydraulic motor 77 flows through valve 4b to drain 79.

Referring now to Figure 7, a preferred embodiment of a normally opened valve 104, constructed in accordance with the present invention, is illustrated. Figure 7 illustrates the valve 104 with inlet pressure applied in the at rest operating position. Components illustrated in Figure 7 that are similar in structure or function to components illustrated in Figures 1-4 and described above are indicated with the same reference numbers applied to Figures 1-4, but with the number 100 added. The embodiment illustrated in Figure 7 differs from that illustrated in Figures 1-4 in that the Figure 1-4 embodiment is a normally closed valve while the Figure 7 embodiment is a normally opened valve. The terms normally closed and normally opened refer to the configuration of the poppets 31, 131 relative to their respective seats 32, 132 when inlet pressure is applied but no electrical power is applied to move the pilot 36. 136. The fluid control valve 105, pilot operator 106, solenoid operator 107 and pressure compensator 108 illustrated in the Figure 7 embodiment operate in a similar manner to their corresponding components illustrated in the Figure 1-4 embodiment, except as described below or as apparent to one of ordinary skill in the art.

When the valve 104 is in the at rest normally opened position illustrated in Figures 7 and 8, inlet pressure is applied to inlet passages 112. Inlet pressure acting against the bottom of poppet 131 holds the poppet 131 in its opened position relative to its seat 132. Spring 139 maintains the pilot 136 in an opened position relative to its pilot seat 137, to reduce the pressure on the top side of the poppet 131 that is communicated through passage 133. In this position, no electrical power is applied to the solenoid actuator 107 and the valve 104 is in its normally opened position. When electrical power is applied to solenoid actuator 107, armature 144 begins to move down to close air gap 145. This downward movement of armature 144 pushes rod 148 downward to close pilot 136 relative to its seat 137. Pressure on the top of poppet 131 increases, resulting in movement of the poppet 131 downward toward its seat 132 to close the distance between poppet 131 and seat 132 in proportion to the electrical current applied to solenoid actuator 107. The valve 104 may be used in a manifold such as manifold 17 illustrated In Figure 3.

As described above, one aspect of the invention uses a normally closed or normally opened pilot operated electro-proportional poppet valve 4 or 104 and combines that with a unique pressure compensator that provides low leakage when the pilot operated, poppet 31, 131 is in the closed position. This is combined into a single cartridge valve 4, 104. The proportional poppet valves currently on the market that are known to the inventor do not include integral; pressure compensation. The compensator 8, 108 is made up of two elements rather than the normal single spool. The first element is the spool 58, 158 which is used in the regulation mode to maintain a constant pressure drop across the pilot operated poppet 31, 131 and seat 32, 132. The spool 58, 158 at rest position has the metering passage 13, 13 closed. The spool 58, 158 moves to open the cross drilled holes 13, 113 in the sleeve 14, 114 in order to maintain the flow rate. The position of the spool 58, 158 in relation to the holes 13, 113 is proportional to the differential of the valve inlet 12, 112 to outlet 13, 113 pressure. The second element is the piston 64, 164. The piston 64, 164 is used to sense the pressure downstream of the poppet 31, 131 and at the inlet to the valve before the poppet 31, 131. One unique feature of the spool/piston combination is that the smaller piston 64, 164 diameter allows the spring 61, 161 to remain smaller than the larger spool 58, 158 needed to pass the higher flow rates. That allows for a more compact design. An additional feature of the piston 64, 164 is that one end of the piston exposed to the inlet pressure acting on the piston pushes the piston poppet end against a seat 67, 167 built into the sleeve 14, 114. The seat design provides for low leakage and would allow the valve to hold a load in position over a longer period of time than a spool valve.

**Claims**

1. A cartridge valve (4) comprising:

   a valve cage (14) defining a central passage (22), a fluid inlet (12) and a fluid outlet (13), a fluid flow control valve (5) received in the passage and defining a valve area (31, 32; 131, 132) between the inlet and the outlet, the fluid flow control valve having a valve poppet (31) moveable from a first normally closed position sealing with a valve seat (32) and blocking flow from the inlet to the outlet to a second position unblocking flow from the inlet to the outlet, and a pressure compensator (8) received in the passage for controlling a pressure differential across the valve area (31, 32; 131, 132), the pressure compensator comprising:

a longitudinally movable compensator spool (58, 158) defining a variable fluid flow orifice (58, 13; 158, 113) at the fluid outlet (13) and having a fluid flow area determined by the position of the compensator spool, and

a longitudinally movable compensator control piston (64,164) having a first side and a second side, the compensator control piston acting against the compensator spool at the first side to move the compensator spool and change the position of the compensator spool to control the pressure differential across the valve area in which the second side is exposed to inlet pressure in the inlet.

2. A cartridge valve as set forth in claim 1, in which the compensator spool is pressure balanced and the compensator control piston is pressure unbalanced.

3. A cartridge valve as set forth in claim 1, in which the compensator control piston has a first lateral cross sectional area (64a, 164a) exposed to fluid pressure on one side of the valve area and an oppositely facing second lateral cross sectional area (64b, 164b) exposed to fluid pressure on another side of the valve area.

4. A cartridge valve as set forth in claim 3, in which the first and second lateral cross sectional areas of the compensator control piston are substantially equal.

5. A cartridge valve as set forth in claim 4, in which the compensator spool has first and second oppositely facing lateral cross sectional areas (58a, 58b; 158a, 158b) exposed to fluid pressure on one side of the valve area, and the first and second lateral cross sectional areas of the compensator spool are substantially equal.

6. A cartridge valve as set forth in claim 5, in which the first and second lateral cross sectional areas of the compensator control piston are each smaller than each of the first and second lateral cross sectional areas of the compensator spool.

7. A cartridge valve as set forth in claim 1, in which the compensator spool and the compensator control piston each has oppositely facing equal size lateral cross sectional areas (58a, 58b; 158a, 158b; 64a, 64b; 164a, 164b), and the lateral cross sectional areas of the compensator piston are smaller than the lateral cross sectional areas of the compensator spool.

8. A cartridge valve as set forth in claim 7, in which the compensator control piston acts against the compensator spool in one longitudinal direction, the compensator further includes a spring (61, 161), and the spring acts against the compensator spool or the compensator control piston in a longitudinal direction opposite the one direction.

9. A cartridge valve as set forth in claim 8, in which the compensator spool has oppositely facing lateral cross sectional areas (58a, 58b; 158a, 158b) exposed to fluid pressure from one side of the valve area, the compensator control piston has oppositely facing lateral cross sectional areas (64a, 64b; 164a, 164b) with one of its areas exposed to fluid pressure from the one side of the valve area and with the other of its areas exposed to fluid pressure from the other side of the valve area.

10. A cartridge valve as set forth in any of preceding claims 1-9, in which the compensator control piston includes a valve surface (66, 166) that substantially fully closes leakage fluid flow around the compensator control piston between the oppositely facing lateral cross section areas of the compensator control piston when the compensator control piston is moved in one longitudinal direction.

11. A cartridge valve as set forth in claim 1, in which the valve area is defined by a valve poppet (31, 131) and a valve seat (32, 132), the compensator control piston acts against the compensator spool in one longitudinal direction, the compensator includes a spring, the spring acts against the compensator spool in a longitudinal direction opposite the one direction, the compensator spool lateral cross sectional area includes oppositely facing substantially equal lateral cross sectional areas exposed to substantially equal fluid pressure from one side of the valve area, the compensator control piston lateral cross sectional area includes substantially equal oppositely facing lateral cross sectional areas with one of its areas exposed to fluid pressure from the one side of the valve area and with the other of its areas exposed to fluid pressure from the other side of the valve area, the compensator control piston includes a valve surface that substantially fully closes fluid leakage between the oppositely facing lateral cross section areas of the compensator control piston when the compensator control piston is moved in one longitudinal direction.

12. A cartridge valve as set forth in claim 11, including a valve cartridge cage (14, 114), the valve area and the compensator being integral and being disposed in the valve cartridge cage, the valve cartridge cage having an inlet (12, 112) and an outlet (13, 113) and an intermediate chamber (59, 159) between the inlet and the outlet, the valve area opening and closing fluid pressure communication between the inlet and the intermediate chamber, the compensator spool opening and closing fluid pressure communication between the intermediate chamber and the outlet, and the compensator maintaining a substantially constant pressure differential between the inlet and the intermediate chamber.

13. A cartridge valve as set forth in claim 11, including a pilot operator operatively connected to the valve poppet and an electrical solenoid armature (44, 144) operatively connected to the pilot operator, whereby the position of the valve poppet relative to the valve seat is proportional to electrical power supplied to the solenoid operator, and the pressure differential between the inlet and the intermediate chamber across the valve area is substantially constant.

14. A cartridge valve as set forth in any of preceding claims 1-9, in which the compensator spool is selectively operable to proportionally open and close a metering passage (58, 13; 158, 113) through a housing sleeve, the position of the compensator spool in blocking the metering passage is proportional to the inlet to outlet pressure differential, the compensator control piston is operable to sense the pressure differential across the valve area, the compensator control piston having one end exposed to inlet pressure, and inlet pressure acting on the compensator control piston forcing a compensator control piston surface to sealingly engage a compensator control piston seat.

15. A cartridge valve as set forth in any of preceding claims 1-9, in which the compensator control piston lateral cross sectional area includes one lateral cross sectional area exposed to fluid pressure upstream of the valve area and another lateral cross sectional area exposed to fluid pressure downstream of the valve area, a leakage flow path between the upstream and downstream lateral cross sectional areas is defined by the compensator control piston, and the compensator control piston includes a valve that substantially closes the leakage flow path when the compensator control piston is in a position that moves the compensator spool to substantially close its variable fluid flow orifice when the valve poppet (31;131) is in the closed position.

**Patentansprüche**

1. Ein Patronenventil (4), das umfasst:

einen Ventilkäfig (14), der einen Zentraldurchgang (22), einen Fluideinlass (12) und einen Fluidauslass (13) definiert, ein Fluidströmungssteuerungsventil (5), das in dem Kanal aufgenommen ist und einen Ventilbereich (31, 32; 132, 132) zwischen dem Einlass (12) und dem Auslass (13) definiert, wobei das Fluidströmungssteuerungsventil einen Ventilkegel (31) hat, der von einer ersten normalerweise geschlossenen Position, in welcher er mit einem Ventilsitz (32) abschließt und Strömung von dem Einlass zu dem Auslass blockiert, zu einer zweiten Stellung bewegbar ist, in welcher er Strömung von dem Einlass zu dem Auslass freigibt, und

einen Druckkompensator (8), der in dem Kanal zum Steuern einer Druckdifferenz über den Ventilbereich (31, 32; 131, 132) aufgenommen ist, wobei der Druckkompensator umfasst:

einen longitudinal bewegbaren Kompensatorschieber (58, 158), der eine variable Fluidströmungsöffnung (58, 13; 158, 113) an dem Fluidauslass (13) definiert und einen Fluidströmungsquerschnitt aufweist, der über die Position des Kompensatorschiebers definiert wird, und einen longitudinal bewegbaren Kompensatorsteuerungskolben (64, 164), der eine erste Seite und eine zweite Seite hat, wobei der Kompensatorsteuerungskolben an der ersten Seite gegen den Kompensatorschieber arbeitet, um den Kompensatorschieber zu bewegen und die Position des Kompensatorschiebers zu verändern, um die Druckdifferenz über den Ventilbereich zu steuern, in welchem die zweite Seite dem Einlassdruck in dem Einlass ausgesetzt ist.

2. Ein Patronenventil nach Anspruch 1, bei dem der Kompensatorschieber (64, 164) druckkompensiert ist und der Kompensatorsteuerungskolben nicht druckkompensiert ist.

3. Ein Patronenventil nach Anspruch 1, bei dem der Kompensatorsteuerungskolben eine erste laterale Querschnittfläche (64a, 164a), die Fluiddruck auf einer Seite des Ventilbereichs ausgesetzt ist, und eine in Gegenrichtung weisende zweite laterale Querschnittsfläche (64b, 164b) hat, die Fluiddruck auf einer anderen Seite des Ventilbereichs ausgesetzt ist.

4. Ein Patronenventil nach Anspruch 3, bei dem die erste und die zweite Querschnittsfläche des Kompensatorsteuerungskolbens im Wesentlichen gleich sind.

5. Ein Patronenventil nach Anspruch 4, bei dem der Kompensatorschieber erste und zweite in Gegenrichtung weisende laterale Querschnittflächen (58a, 58b; 158a, 158b) hat, die Fluiddruck auf einer Seite des Ventilbereichs ausgesetzt sind, und bei dem die erste laterale Querschnittsfläche und die zweite laterale Querschnittfläche des Kompensatorschiebers im Wesentlichen gleich sind.

6. Ein Patronenventil nach Anspruch 5, bei dem die erste laterale Querschnittsfläche und die zweite laterale Querschnittfläche des Kompensatorsteuerungskolbens jeweils kleiner als die jeweils erste und zweite lateralen Querschnittflächen des Kompensatorschiebers sind.

7. Ein Patronenventil nach Anspruch 1, bei dem der Kompensatorschieber und der Kompensatorsteuerungskolben beide in Gegenrichtung weisende gleich große laterale Querschnittsflächen (58a, 58b; 158a, 158b; 64a, 64b; 164a, 164b) haben, und die lateralen Querschnittsflächen des Kompensatorkolbens kleiner als die lateralen Querschnittsflächen des Kompensatorschiebers sind.

8. Ein Patronenventil nach Anspruch 7, bei dem der Kompensatorsteuerungskolben gegen den Kompensatorschieber in eine erste longitudinale Richtung arbeitet, der Kompensator ferner eine Feder (61, 161) umfasst und die Feder gegen den Kompensatorschieber oder den Kompensatorsteuerungskolben in eine longitudinale Richtung entgegengesetzt zu der ersten Richtung arbeitet.

9. Ein Patronenventil nach Anspruch 8, bei dem der Kompensatorschieber in Gegenrichtung weisende laterale Querschnittsflächen (58a, 58b; 158a, 158b) hat, die Fluiddruck von einer Seite des Ventilbereichs ausgesetzt sind, wobei der Kompensatorsteuerungskolben in Gegenrichtung weisende laterale Querschnittsflächen (64a, 64b; 164a, 164b) hat, wobei eine seiner Flächen Fluiddruck von der einen Seite des Ventilbereichs ausgesetzt ist und wobei die andere seiner Flächen Fluiddruck von der anderen Seite des Fluidbereichs ausgesetzt ist.

10. Ein Patronenventil nach einem der vorhergehenden Ansprüche 1 bis 9, bei dem der Kompensatorsteuerungskolben eine Ventiloberfläche (66, 166) umfasst, die im Wesentlichen Leckagefluidströmung um den Kompensatorsteuerungskolben herum zwischen den in Gegenrichtung weisenden lateralen Querschnittsflächen des Kompensatorsteuerungskolben vollständig unterbindet, wenn der Kompensatorsteuerungskolben in eine longitudinale Richtung bewegt wird.

11. Ein Patronenventil nach Anspruch 1, bei dem der Ventilbereich über einen Ventilkegel (31, 131) und einen Ventilsitz (32, 132) definiert ist, wobei der Kompensatorsteuerungskolben gegen den Kompensatorschieber in eine erste longitudinale Richtung arbeitet, wobei der Kompensator eine Feder umfasst, die Feder gegen den Kompensatorschieber in eine longitudinale Richtung entgegengesetzt zu der ersten Richtung arbeitet, die laterale Querschnittsfläche des Kompensatorschiebers in Gegenrichtung weisende im Wesentlichen gleiche laterale Querschnittsflächen umfasst, die im Wesentlichen gleichem Fluiddruck von einer Seite des Ventilbereichs ausgesetzt sind, die laterale Querschnittsfläche des Kompensatorsteuerungskolbens im Wesentlichen gleiche in Gegenrichtung weisende laterale Querschnittsflächen umfasst, wobei eine seiner Querschnittsflächen Fluiddruck von einer Seite des Ventilbereichs ausgesetzt ist und die andere seiner Querschnittsflächen Fluiddruck von der anderen Seite des Ventilbereichs ausgesetzt ist, der Kompensatorsteuerungskolben eine Ventiloberfläche umfasst, die im Wesentlichen Fluidleckage zwischen den in Gegenrichtung weisenden, lateralen Querschnittsflächen des Kompensatorsteuerungskolbens vollständig schließt, wenn der Kompensatorsteuerungskolben in eine longitudinale Richtung bewegt wird.

12. Ein Patronenventil nach Anspruch 11, welches einen Ventilpatronenkäfig (14, 114) umfasst, wobei der Ventilbereich und der Kompensator integral sind und in dem Ventilpatronenkäfig angeordnet sind, wobei der Ventilpatronenkäfig einen Einlass (12, 112) und einen Auslass (13, 113) und eine Zwischenkammer (59, 159) zwischen dem Einlass und dem Auslass hat, der Ventilbereich Fluiddruckkommunikation zwischen dem Einlass und der Zwischenkammer öffnet und schließt, wobei der Kompensatorschieber Fluiddruckkommunikation zwischen der Zwischenkammer und dem Auslass öffnet und schließt und der Kompensator eine im Wesentlichen konstante Druckdifferenz zwischen dem Einlass und der Zwischenkammer aufrechterhält.

13. Ein Patronenventil nach Anspruch 11, der einen mit dem Ventilkegel wirksam verbundenen Vorsteueroperator und einen mit dem Vorsteueroperator wirksam verbundenen elektrischen Magnetanker (44, 144) umfasst, wobei die Position des Ventilkegels relativ zu dem Ventilsitz proportional zu der elektrischen Leistung ist, die dem Spulenoperator zugeführt wird, und die Druckdifferenz zwischen dem Einlass und der Zwischenkammer über dem Ventilbereich im Wesentlichen konstant ist.

14. Ein Patronenventil nach einem der vorhergehenden Ansprüche 1 bis 9, bei dem der Kompensatorschieber selektiv antreibbar ist, um einen Messkanal (58, 13; 158, 113) über eine Gehäusehülse proportional zu öffnen und zu schließen, wobei die Position des Kompensatorschiebers beim Blockieren des Messkanals proportional zur Einlass-zu-Auslass-Druckdifferenz ist, wobei der Kompensatorsteuerungskolben in der Lage ist, die Druckdifferenz über den Ventilbereich zu erfassen, wobei der Kompensatorsteuerungskolben ein Ende hat, das Einlassdruck ausgesetzt ist, und wobei Einlassdruck auf den Kompensatorsteuerungskolben wirkt um eine Kompensatorsteuerungskolbenfläche zu zwingen, mit einem Kompensatorsteuerungskolbensitz abdichtend in Eingriff zu kommen.

**15.** Ein Patronenventil nach einem der vorhergehenden Ansprüche 1 bis 9, bei dem die laterale Querschnittsfläche des Kompensatorsteuerungskolbens eine laterale Querschnittsfläche umfasst, die Fluiddruck stromaufwärts von dem Ventilbereich ausgesetzt ist, und eine andere laterale Querschnittsfläche umfasst, die Fluiddruck stromabwärts von dem Ventilbereich ausgesetzt ist, ein Lekagenströmungsweg zwischen den lateralen Querschnittsflächen stromaufwärts und stromabwärts über den Kompensatorsteuerungskolben definiert ist, und der Kompensatorsteuerungskolben ein Ventil umfasst, das im Wesentlichen den Lekagenströmungsweg schließt, wenn der Kompensatorsteuerungskolben in einer Position ist, die den Kompensatorschieber bewegt, um im Wesentlichen ihre variable Fluidströmungsöffnung zu schließen, wenn der Ventilkegel (31, 131) in der geschlossenen Position ist.

**Revendications**

**1.** Appareil à cartouches (4) comprenant :

une cage de soupape (14) définissant un passage central (22), une entrée de fluide (12) et une sortie de fluide (13),
une soupape de commande d'écoulement de fluide (5) reçue dans le passage et définissant une section de passage de soupape (31, 32 ; 131, 132) entre l'entrée et la sortie, la soupape de commande d'écoulement de fluide ayant un champignon de soupape (31) pouvant se déplacer d'une première position normalement fermée étanche avec un siège de soupape (32) et bloquant l'écoulement de l'entrée vers la sortie à une deuxième position débloquant l'écoulement de l'entrée vers la sortie, et
un compensateur de pression (8) reçu dans le passage pour la commande d'un différentiel de pression à travers la section de passage de soupape (31, 32 ; 131, 132), le compensateur de pression comprenant :

une bobine de compensateur mobile longitudinalement (58, 158) définissant un orifice d'écoulement de fluide variable (58, 13 ; 158, 113) au niveau de la sortie de fluide (13) et ayant une zone d'écoulement de fluide déterminée par la position de la bobine de compensateur, et
un piston de commande de compensateur mobile longitudinalement (64, 164) ayant un premier côté et un deuxième côté, le piston de commande de compensateur agissant contre la bobine de compensateur au niveau du premier côté pour déplacer la bobine de compensateur et changer la position de la bobine de compensateur afin de commander le différentiel de pression à travers la section de passage de soupape dans laquelle le deuxième côté est exposé à la pression d'entrée dans l'entrée.

**2.** Appareil à cartouches tel que présenté dans la revendication 1, dans lequel la bobine de compensateur est équilibrée en pression et le piston de commande de compensateur est déséquilibré en pression.

**3.** Appareil à cartouches tel que présenté dans la revendication 1, dans lequel le piston de commande de compensateur présente une première zone de section transversale latérale (64a, 164a) exposée à une pression de fluide sur un côté de la section de passage de soupape et une deuxième zone de section transversale latérale opposée (64b, 164b) exposée à la pression de fluide sur un autre côté de la section de passage de soupape.

**4.** Appareil à cartouches tel que présenté dans la revendication 3, dans lequel les première et deuxième zones de sections transversales latérales du piston de commande de compensateur sont sensiblement égales.

**5.** Appareil à cartouches tel que présenté dans la revendication 4, dans lequel la bobine de compensateur présente des première et deuxième zones de sections transversales latérales opposées (58a, 58b ; 158a, 158b) exposées à la pression de fluide sur un côté de la section de passage de soupape, et les première et deuxième zones de sections transversales latérales de la bobine de compensateur sont sensiblement égales.

**6.** Appareil à cartouches tel que présenté dans la revendication 5, dans lequel les première et deuxième zones de sections transversales latérales du piston de commande de compensateur sont chacune plus petites que chacune des première et deuxième zones de sections transversales latérales de la bobine de compensateur.

**7.** Appareil à cartouches tel que présenté dans la revendication 1, dans lequel la bobine de compensateur et le piston de commande de compensateur présente chacun des zones de sections transversales latérales opposées de taille égale (58a, 58b ; 158a, 158b ; 64a, 64b ; 164a, 164b), et les zones de sections transversales latérales du piston de compensateur sont plus petites que les zones de sections transversales latérales de la bobine de compensateur.

8. Appareil à cartouches tel que présenté dans la revendication 7, dans lequel le piston de commande de compensateur agit contre la bobine de compensateur dans une direction longitudinale, le compensateur comporte en outre un ressort (61, 161), et le ressort agit contre la bobine de compensateur ou contre le piston de commande de compensateur dans une direction longitudinale opposée à la première direction.

9. Appareil à cartouches tel que présenté dans la revendication 8, dans lequel la bobine de compensateur présente des zones de sections transversales latérales opposées (58a, 58b ; 158a, 158b) exposées à la pression de fluide à partir d'un côté de la section de passage de soupape, le piston de commande de compensateur présente des zones de sections transversales latérales opposées (64a, 64b; 164a, 164b) avec l'une de ses zones exposées à la pression de fluide à partir du côté de la section de passage de soupape et avec l'autre de ses zones exposées à la pression de fluide à partir de l'autre côté de la section de passage de soupape.

10. Appareil à cartouches tel que présenté dans l'une des revendications précédentes 1 à 9, dans lequel le piston de commande de compensateur comporte une surface de soupape (66, 166) qui ferme sensiblement totalement un écoulement de fluide de fuite autour du piston de commande de compensateur entre les zones de sections transversales latérales opposées du piston de commande de compensateur lorsque le piston de commande de compensateur est déplacé dans une direction longitudinale.

11. Appareil à cartouches tel que présenté dans la revendication 1, dans lequel la section de passage de soupape est définie par un champignon de soupape (31, 131) et un siège de soupape (32, 132), le piston de commande de compensateur agit contre la bobine de compensateur dans une direction longitudinale, le compensateur comporte un ressort, le ressort agit contre la bobine de compensateur dans une direction longitudinale opposée à la première direction, la zone de section transversale latérale de la bobine de compensateur comporte des zones de sections transversales latérales opposées sensiblement égales exposées à une pression de fluide sensiblement égale à partir d'un côté de la section de passage de soupape, la zone de section transversale latérale du piston de commande de compensateur comporte des zones de sections transversales latérales opposées sensiblement égales avec l'une de ses zones exposées à la pression de fluide à partir du côté de la section de passage de soupape et avec l'autre de ses zones exposées à la pression de fluide à partir de l'autre côté de la section de passage de soupape, le piston de commande de compensateur comporte une surface de soupape qui ferme sensiblement totalement une fuite de fluide entre les zones de sections transversales latérales opposées du piston de commande de compensateur lorsque le piston de commande de compensateur est déplacé dans une direction longitudinale.

12. Appareil à cartouches tel que présenté dans la revendication 11, comportant une cage de cartouche de soupape (14, 114), la section de passage de soupape et le compensateur étant en un seul tenant et étant disposés dans la cage de cartouche de soupape, la cage de cartouche de soupape ayant une entrée (12, 112) et une sortie (13, 113) et une chambre intermédiaire (59, 159) entre l'entrée et la sortie, la section de passage de soupape ouvrant et fermant une communication de pression de fluide entre l'entrée et la chambre intermédiaire, la bobine de compensateur ouvrant et fermant une communication de pression de fluide entre la chambre intermédiaire et la sortie, et le compensateur maintenant un différentiel de pression sensiblement constant entre l'entrée et la chambre intermédiaire.

13. Appareil à cartouches tel que présenté dans la revendication 11, comportant un opérateur de pilote relié de manière fonctionnelle au champignon de soupape et une armature de solénoïde électrique (44,144) reliée de manière fonctionnelle à l'opérateur de pilote, moyennant quoi la position du champignon de soupape par rapport au siège de soupape est proportionnelle à la puissance électrique fournie à l'opérateur de solénoïde, et le différentiel de pression entre l'entrée et la chambre intermédiaire à travers la section de passage de soupape est sensiblement constant.

14. Appareil à cartouches tel que présenté dans l'une des revendications précédentes 1 à 9, dans lequel la bobine de compensateur peut fonctionner de manière sélective pour ouvrir et fermer de manière proportionnelle un passage de dosage (58, 13, 158, 113) à travers un manchon de boîtier, la position de la bobine de compensateur pendant le blocage du passage de dosage est proportionnelle à l'entrée au différentiel de pression de sortie, le piston de commande de compensateur peut fonctionner pour détecter le différentiel de pression à travers la section de passage de soupape, le piston de commande de compensateur ayant une extrémité exposée à une pression d'entrée, et une pression d'entrée agissant sur le piston de commande de compensateur forçant une surface du piston de commande de compensateur à venir en prise de manière étanche avec un siège du piston de commande de compensateur.

15. Appareil à cartouches tel que présenté dans l'une des revendications précédentes 1 à 9, dans lequel la zone de section transversale latérale du piston de commande de compensateur comporte une zone de section transversale latérale exposée à la pression de fluide en amont de la section de passage de soupape et une autre zone de section transversale latérale exposée à la pression de fluide en aval de la section de passage de soupape, une trajectoire d'écoulement de fuite entre les zones de sections transversales latérales en amont et en aval est définie par le piston de commande de compensateur, et le piston de commande de compensateur comporte une soupape qui ferme sensiblement la trajectoire d'écoulement de fuite lorsque le piston de commande de compensateur est dans une position qui déplace la bobine de compensateur pour fermer sensiblement son orifice d'écoulement de fluide variable lorsque le champignon de soupape (31, 131) est dans la position fermée.

FIG. 1

FIG. 2

FIG. 3

FIG. 4

FIG. 5

FIG. 6

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3777773 A
- US 5375623 A